# EUROPÄISCHE PATENTANMELDUNG

(11) **EP 4 316 737 A1**
(43) Veröffentlichungstag der Anmeldung: **07.02.2024**
(21) Anmeldenummer: 22203866.3
(22) Anmeldetag: 26.10.2022
(51) Int. Cl.: B25F 5/00, B25J 11/00, B25J 5/00, B25J 15/04

(54) **FERNSTEUERBARE WERKZEUGMASCHINE ZUR NUTZUNG DURCH EINEN BAUROBOTER UND SYSTEM**

(30) Priorität: 03.08.2022 EP 22188419
(71) Anmelder: Hilti Aktiengesellschaft, 9494 Schaan (LI)
(72) Erfinder: Koscheck, David, 86899 Landsberg (DE); Hauser, Klaus, 86830 Schwabmünchen (DE); Nitzschner, Michael, 86156 Augsburg (DE); Schmid, Tobias, 86875 Emmenhausen (DE); Brugger, Peter, 6800 Feldkirch (AT); Britz, Rory, 82319 Starnberg (DE); Hartmann, Markus, 87665 Mauerstetten (DE); Hurka, Florian, 86459 Margertshausen (DE); Fürfanger, Georg, 81373 München (DE); Frenzel, Mathias, 86944 Unterdießen (DE)
(74) Vertreter: Hilti Aktiengesellschaft Corporate Intellectual Property

(57) **Zusammenfassung**

Die Erfindung betrifft eine elektrische Werkzeugmaschine (10), insbesondere Handwerkzeugmaschine, umfassend einen Motor (40) und eine Werkzeugaufnahme (14) zur Aufnahme eines Werkzeugs, beispielsweise eines Bohrwerkzeugs, Trennwerkzeugs und / oder eines Schleifwerkzeugs, wobei der Motor (40) eingerichtet ist, die Werkzeugaufnahme (14) anzutreiben. Die Werkzeugmaschine (10) ist fernsteuerbar. Sie kann eine Schutzeinrichtung (42) aufweisen, die ferngesteuert aktivierbar und / oder deaktivierbar ist. Des Weiteren betrifft die Erfindung ein System (200) aus einer solchen Werkzeugmaschine (10) und einem Bauroboter (210). Die Werkzeugmaschine (10) ist besonders universell und einfach verwendbar, insbesondere sowohl manuell als auch automatisiert mithilfe des Bauroboters (210).

## Beschreibung

Die Erfindung befasst sich mit der Nutzung einer elektrischen Werkzeugmaschine durch einen Bauroboter.

Um einen Bauroboter möglichst flexibel und kostengünstig einsetzen zu können, ist es wünschenswert, wenn der Bauroboter mit unterschiedlichen Arten von elektrischen Werkzeugmaschinen zusammen genutzt werden kann.

Niedrige Betriebskosten lassen sich insbesondere erwarten, wenn auch anderweitig verwendbare Werkzeugmaschinen mit geringem Aufwand zusammen mit einem Bauroboter genutzt werden könnten.

Aufgabe der vorliegenden Erfindung ist es daher, eine Werkzeugmaschine anzubieten, die mit möglichst geringem Umstellungsaufwand sowohl eine manuelle als auch eine mit Hilfe eines Bauroboters automatisierte Nutzung ermöglicht, sowie einen Bauroboter mit einer solchen Werkzeugmaschine bereitzustellen.

Gelöst wird die Aufgabe durch eine elektrische Werkzeugmaschine, insbesondere eine Handwerkzeugmaschine, umfassend einen Motor und eine Werkzeugaufnahme zur Aufnahme eines Werkzeugs, beispielsweise eines Bohrwerkzeugs, Trennwerkzeugs und / oder eines Schleifwerkzeugs, wobei der Motor eingerichtet ist, die Werkzeugaufnahme anzutreiben, wobei die Werkzeugmaschine elektrisch und / oder per Funk fernsteuerbar ist.

Dem liegt der Gedanke zugrunde, dass es zwar grundsätzlich denkbar ist, eine Werkzeugmaschine mit einem Bauroboter zu verwenden, in dem ein oder mehrere Betätigungselemente der Werkzeugmaschine mechanisch, beispielsweise mit Hilfe einer Hydraulik und / oder einer Pneumatik, bedingt werden, so dass die Werkzeugmaschine durch den Bauroboter beispielsweise eingeschaltet oder ausgeschaltet werden kann.

Eine solche Hydraulik oder eine solche Pneumatik würden jedoch jeweils umfangreiche Umbauten am Bauroboter erfordern. Die Umbauten müssten zudem Werkzeugmaschinenspezifisch erfolgen.

Die hier vorgestellte Werkzeugmaschine erlaubt es dagegen, von dem Bauroboter ferngesteuert zu werden. Die Fernsteuerung kann entweder per Funk und / oder über eine elektrische Verbindung erfolgen. Umfangreicher zusätzlicher Komponenten für eine mechanische Steuerung der Werkzeugmaschine, insbesondere für eine spezifisch auf die Werkzeugmaschine angepasste mechanische Steuerung, erübrigen sich.

Somit lässt sich die Werkzeugmaschine durch den Bauroboter mit geringem Vorbereitungsaufwand und damit besonders kostengünstig verwenden.

Dennoch bleibt die Werkzeugmaschine problemlos manuell nutzbar. Insbesondere behindern weder eine elektrische noch eine funkbasierte Fernsteuerung eine manuelle Handhabung der Werkzeugmaschine.

Eine solche problemlose manuelle Nutzungsmöglichkeit kann zu einer weiteren Verbreitung der Werkzeugmaschine führen. Insbesondere kann die Werkzeugmaschine eine Handwerkzeugmaschine sein. So lassen sich Skaleneffekte nutzen, wodurch Herstellungskosten der Werkzeugmaschine weiter gesenkt werden können.

Denkbar ist, dass die Werkzeugmaschine eine Datenschnittstelle aufweist, wobei vorzugsweise die Werkzeugmaschine über die Datenschnittstelle fernsteuerbar ist.

Beispielsweise kann die Datenschnittstelle eingerichtet sein, Steuerbefehle, Eigenschaftsdaten und / oder Zustandsdaten zu übertragen.

Beispielsweise kann ein Betriebsmodus und / oder ein Betriebszustand der Werkzeugmaschine steuerbar sein.

Insbesondere kann die Werkzeugmaschine ferngesteuert einschaltbar und / oder ausschaltbar sein.

Denkbar ist auch, dass wenigstens eine Arbeitsleistung, eine Drehrichtung, eine Drehfrequenz, ein Drehmoment, oder eine Schlagfrequenz ferngesteuert einstellbar sind.

Bei Werkzeugmaschinen, die eine Schlagfunktion aufweisen, kann es günstig sein, wenn auch die Schlagfunktion ferngesteuert einstellbar ist. So kann der Bauroboter beispielsweise zum Bohren eines Loches in Beton zunächst mit deaktivierter Schlagfunktion zu bohren beginnen und später die Schlagfunktion aktivieren, um das Risiko unerwünschter ausgebrochener Bohrlochränder zu minimieren.

Die Werkzeugmaschine kann eingerichtet sein, als Eigenschaftsdaten beispielsweise wenigstens ein Identifikationsdatum, ein Leistungsvermögen, beispielsweise eine maximal verfügbare Schlagenergie und / oder eine maximal verfügbare Arbeitsleistung, abrufbar, insbesondere über die Datenschnittstelle abrufbar, bereit zu stellen.

Auch ist denkbar, dass die Werkzeugmaschine eingerichtet ist, wenigstens einen Betriebszustand der Werkzeugmaschine, beispielsweise wenigstens eine Drehzahl, eine Temperatur, ein Maß für einen Verschleiß einer Komponenten, oder dergleichen, abrufbar, insbesondere über die Datenschnittstelle abrufbar, bereit zu stellen.

Dazu ist es vorteilhaft, wenn die Datenschnittstelle bidirektional ausgebildet ist. Dann können sowohl beispielweise Steuerbefehle vom Bauroboter zur Werkzeugmaschine als auch Eigenschafts- und / oder Zustandsdaten von der Werkzeugmaschine zum Bauroboter übermittelt werden. Denkbar ist dabei auch, dass Steuerbefehle und / oder Eigenschafts- und / oder Zustandsdaten alternativ oder ergänzend auch in der jeweiligen Gegenrichtung übertragbar sind.

Die Werkzeugmaschine kann wenigstens eine Schutzeinrichtung zum Schutz eines Benutzers bei manueller Nutzung der Werkzeugmaschine aufweisen.

Die Schutzeinrichtung kann beispielsweise eine Anlaufsperre, insbesondere eine Wiederanlaufsperre, sein, die ein Starten des Motors durch bloßes Anlegen einer Versorgungsspannung, insbesondere ohne zusätzliches Betätigen eines Betätigungselements, verhindert.

Die Werkzeugmaschine kann ein Betätigungselement aufweisen, mit dessen Hilfe die Schutzeinrichtung implementiert ist. Das Betätigungselement kann ein elektrischer Schalter, beispielsweise ein Drehschalter, ein Schiebeschalter oder ein Kippschalter, ein elektrischer Taster, beispielsweise ein Drucktaster, oder ein Stellelement, beispielsweise ein Drehregler, beispielsweise ein Potentiometer, oder ein Schieberegler, sein.

Die Werkzeugmaschine kann auch einen Sensor aufweisen. Der Sensor kann eingerichtet sein, eine Schutzsituation zu detektieren. Die Schutzsituation kann dem Fall entsprechen, dass die Schutzeinrichtung zu aktivieren ist.

Der Sensor kann beispielsweise ein Näherungssensor, ein Beschleunigungssensor, ein Rotationssensor, ein Translationssensor, ein Strom- und / oder ein Spannungssensor sein.

Die Schutzeinrichtung kann eingerichtet sein, eine Vibration, eine Arbeitsleistung, eine Drehfrequenz, eine Geschwindigkeit und / oder ein Drehmoment zu reduzieren oder zu stoppen, sodass bei Eintritt eines durch die Schutzeinrichtung überwachten Falles, der Benutzer intuitiv über den Eintritt des überwachten Falles informiert und / oder unmittelbar vor dessen Folgen geschützt wird.

Die Schutzeinrichtung kann auch eingerichtet sein, einen Betrieb des Motors zu sperren. Somit ist es möglich, eine Verwendung der Werkzeugmaschine zu verhindern, bis der überwachte Fall nicht mehr vorliegt. Eine Verletzung eines Benutzers kann so bereits im Vorfeld vermieden werden.

Die Schutzeinrichtung kann deaktivierbar, insbesondere aktivierbar und deaktivierbar, sein. Insbesondere kann sie ferngesteuert deaktivierbar, insbesondere ferngesteuert aktivierbar und deaktivierbar, sein.

Werkzeugmaschinen verfügen teilweise über Schutzeinrichtungen, die für eine sichere Nutzung durch einen menschlichen Benutzer vorgesehen sind. Beispielsweise kann ein Drehzahlregler vorgesehen sein, sodass eine Drehzahl erst nach Niederdrücken einstellbar ist. So können versehentliche Fehlbedienungen bei manueller Nutzung vermieden werden.

Ein weiteres Beispiel einer Schutzeinrichtung ist auch eine Blockadeerkennung, beispielsweise eine Erkennung, dass ein Bohrer einer Bohrmaschine in einem Untergrund verklemmt ist, und / oder eine selbsttätige Drehmomentregelung, jeweils in Verbindung mit einer selbsttätigen Abschaltung oder zumindest mit einer selbsttätigen Drehzahlreduktion, sein.

Ein weiteres Beispiel einer Schutzeinrichtung ist eine Wiederanlaufsperre, die verhindert, dass der Motor in Betrieb gesetzt wird, ohne dass der entsprechende Schalter oder Regler niedergedrückt oder allgemein manuell betätigt worden ist. Eine solche Wiederanlaufsperre ist insbesondere bei kabellos betreibbaren Werkzeugmaschinen denkbar, um ein unerwünschtes Anlaufen beim Laden eines Akkumulators der Werkzeugmaschine zu vermeiden.

Eine Schutzeinrichtung kann auch eine Vibrationsdämpfung, insbesondere eine Vibrationsdämpfung zur Reduktion von Vibrationen eines Griffabschnitts der Werkzeugmaschine, sein.

Denkbar ist auch, dass die Schutzeinrichtung eingerichtet ist, den Benutzer zu einer bestimmten Geste zu veranlassen. Beispielsweise kann die Werkzeugmaschine zwei an verschiedenen Stellen angeordnete Betätigungselemente aufweisen, sodass nur bei gleichzeitiger Betätigung beider Betätigungselemente der Motor gestartet wird. So kann beispielsweise sicher gestellt werden, dass der Benutzer die Werkzeugmaschine mit beiden Händen an definierten Stellen hält und dadurch beispielsweise eine Verletzung einer der beiden Hände ausgeschlossen werden kann.

Während derartige Schutzeinrichtungen eine manuelle Nutzung durch einen menschlichen Benutzer erleichtern und / oder schützen können, können sie eine Nutzung durch einen Bauroboter teilweise erheblich erschweren oder gar unmöglich machen.

Beispielsweise müsste im letztgenannten Beispiel ein Bauroboter eingerichtet werden, die bestimmte Geste zu imitieren, um die Werkzeugmaschine nutzen zu können. Anderenfalls könnte die Werkzeugmaschine nicht durch den Bauroboter genutzt werden.

In solchen Fällen kann somit das Spektrum durch den Bauroboter nutzbarer Werkzeugmaschinen erweitert werden, wenn die Schutzeinrichtung der Werkzeugmaschine, insbesondere ferngesteuert, deaktivierbar ist. Ist sie auch, insbesondere ferngesteuert, aktivierbar, kann sie genau dann deaktiviert werden, wenn sie die Nutzung durch einen Bauroboter behindert und in anderen Situationen vorsorglich wieder aktiviert werden.

Die Werkzeugmaschine kann eingerichtet sein, dass die Deaktivierung und / oder die Aktivierung der Schutzeinrichtung aktiv, insbesondere durch Übermitteln eines entsprechenden Steuerbefehls, erfolgt.

Denkbar ist auch, dass die Werkzeugmaschine zu einer passiven Deaktivierung und / oder Aktivierung eingerichtet ist, beispielsweise indem, dass die Werkzeugmaschine selbsttätig erkennt, ob sie manuell oder automatisiert durch einen Bauroboter genutzt wird.

Die Werkzeugmaschine kann eine Akkuschnittstelle zum Anschluss eines Akkumulators aufweisen. Sie kann somit kabellos betreibbar sein.

Zumindest ein Teil der Datenschnittstelle kann in die Akkuschnittstelle integriert sein. Dann kann die Fernsteuerung über die Datenschnittstelle erfolgen.

Vorgestellt wird weiter ein **System** umfassend einen Bauroboter und eine elektrische Werkzeugmaschine, wobei die elektrische Werkzeugmaschine an einem Endeffektor des Bauroboters angeordnet ist, wobei der Bauroboter eingerichtet ist, die Schutzeinrichtung der Werkzeugmaschine zu aktivieren und / oder zu deaktivieren. Die Werkzeugmaschine kann dazu der vorangehend beschriebenen Werkzeugmaschine entsprechen, wobei sie jedenfalls die Schutzeinrichtung aufweist.

Bei einem solchen System kann der Bauroboter die Schutzeinrichtung vor der Nutzung der Werkzeugmaschine deaktivieren, sodass sie die eigentliche Nutzung nicht weiter behindern kann.

Vorgestellt wird auch ein Schnittstellenadapter zur Verbindung einer elektrischen Werkzeugmaschine mit einem Endeffektor eines Bauroboters, wobei der Schnittstellenadapter eine Verbindungsstelle zur Verbindung mit einer Werkzeugmaschine aufweist, die komplementär zu einer Standard-Akkuschnittstelle einer Werkzeugmaschine ausgebildet ist.

Ein der Erfindung dabei zugrunde liegender Gedanke ist dabei, dass elektrische Werkzeugmaschinen, insbesondere akkubetriebene Werkzeugmaschinen, beispielsweise akkubetriebene Handwerkzeugmaschinen wie Handbohrmaschinen, insbesondere Gesteinsbohrmaschinen, Nagelsetzmaschinen, Schleifmaschinen, Sägemaschinen, Meißelmaschinen oder dergleichen, meistens eine zumindest über mehrere Arten von Werkzeugmaschinen beispielsweise ein und desselben Herstellers standardisierte, insbesondere einheitlich ausgebildete, Energieversorgungsschnittstellen aufweisen.

So weisen Akku-betriebene Werkzeugmaschinen eine Standard-Akkuschnittstelle auf, über die ein dem jeweiligen Standard entsprechender Akkumulator an die Werkzeugmaschine montiert werden kann. Der Standard-Akkuschnittstelle können dabei wenigstens zwei Funktionalitäten zukommen: ersten kann die Standard-Akkuschnittstelle ausgebildet sein, den Akkumulator sicher an der Werkzeugmaschine zu halten. Dazu kann die Standard-Akkuschnittstelle beispielsweise einen Rastmechanismus aufweisen.

Zweitens kann die Standard-Akkuschnittstelle zur Übertragung von Betriebsenergie eingerichtet sein. Die Betriebsenergie kann dabei unidirektional, insbesondere vom Akkumulator zur Werkzeugmaschine hin, übertragbar sein. Sie kann auch bidirektional übertragbar sein, beispielsweise um den Akkumulator im Wege der Rekuperation wiederaufzuladen. Die Standard-Akkuschnittstelle kann noch weitere Funktionalitäten aufweisen. Insbesondere kann sie auch zur Signalübertragung zwischen dem Akkumulator und der Werkzeugmaschine eingerichtet sein. Auch diese Signalübertragung kann unidirektional oder bidirektional sein.

Somit kann der Schnittstellenadapter an einer Seite am Endeffektor des Bauroboters montiert werden. Über die Verbindungsstelle kann der Schnittstellenadapter andererseits an der Standard-Akkuschnittstelle der Werkzeugmaschine, insbesondere anstelle eines herkömmlichen Akkumulators, montiert werden. Somit kann die Werkzeugmaschine über den Schnittstellenadapter am Endeffektor montiert werden. Dies ist mit allen Werkzeugmaschinen möglich, die die gleiche Standard-Akkuschnittstelle aufweisen, und somit in der Regel mit einer Vielzahl verschiedener Arten von, insbesondere mit einem Akkumulator betreibbaren, Werkzeugmaschinen.

In der Regel sind Standard-Akkuschnittstellen zur werkzeuglosen Befestigung und / oder zur werkzeuglosen Demontage eines Akkumulators ausgebildet. Somit lässt sich auch die Werkzeugmaschine einfach und schnell, insbesondere ohne dass ein Werkzeug benötigt würde, auch wieder vom Endeffektor trennen.

Da solche Standard-Akkuschnittstellen üblicherweise einen Rastmechanismus zur Fixierung des Akkumulators aufweisen, kann dennoch gewährleistet sein, dass die Werkzeugmaschine sicher am Endeffektor gehaltert ist.

Der Bauroboter kann zur Bearbeitung einer Wand und / oder einer Decke, insbesondere einer Hochbau-Baustelle, einer Tiefbau-Baustelle und / oder einer Industrieanlage eingerichtet sein.

Denkbar ist, dass der Schnittstellenadapter eine Werkzeugmaschinen-Signalschnittstelle und eine Bauroboter-Signalschnittstelle zur Übermittlung wenigstens eines Signals zwischen dem Bauroboter und der Werkzeugmaschine aufweist. Somit kann über eine mechanische Verbindung des Bauroboters mit der Werkzeugmaschine hinaus auch eine signaltechnische Verbindung zwischen den beiden Geräten mit Hilfe des Schnittstellenadapters hergestellt werden.

Unter einem Signal können beispielsweise wenigstens ein Steuersignal und / oder wenigstens ein Sensorsignal verstanden werden.

Die Übertragung kann uni- oder bidirektional sein.

Der Schnittstellenadapter kann auch eine zusätzliche Akkuschnittstelle und / oder eine zusätzliche Signalschnittstelle aufweisen, mit der ein Akkumulator am Schnittstellenadapter anschließbar ist.

Die Werkzeugmaschinen- und die Bauroboter-Signalschnittstellen können auch zur Betriebsenergieübertragung eingerichtet sind. Somit kann die Werkzeugmaschine mit elektrischer Betriebsenergie versorgbar sein. Dabei kann unter Betriebsenergie die Energie verstanden werden, die im Wesentlichen zum gewöhnlichen Betrieb der Werkzeugmaschine erforderlich ist. Entsprechend können die Signalschnittstellen eingerichtet sein, elektrische Momentanleistungen von wenigstens 0,1 kW, beispielsweise von mindestens 1 kW, zu übertragen.

Weist der Schnittstellenadapter die zusätzliche Akkuschnittstelle und / oder die zusätzliche Signalschnittstelle auf, kann auch Betriebsenergie zu einem an dieser bzw. diesen Schnittstellen angeordneten Akkumulator übertragbar sein, beispielsweise, um den Akkumulator aufzuladen. Es kann auch Betriebsenergie von diesem Akkumulator weg übertragbar sein, beispielsweise um kurzzeitig eine besonders erhöhte elektrische Leistung der Werkzeugmaschine bereitstellen zu können.

Zumindest ein Teil der Werkzeugmaschinen-Signalschnittstelle kann als Teil der Verbindungsstelle ausgebildet sein. Beispielsweise kann die Werkzeugmaschinen-Signalschnittstelle ein oder mehrere elektrische Kontakte der Verbindungsstelle nutzen oder zumindest mitnutzen.

So kann ein Sensorsignal über die Verbindungsstelle übertragbar sein.

Denkbar ist auch, dass eine separate Steuerschnittstelle zur Übertragung von Steuersignalen, beispielsweise zum Ein-/Ausschalten der Werkzeugmaschine oder zum Steuern wenigstens eines Arbeitsparameters, beispielsweise einer Drehzahl, vorhanden ist. Dies kann beispielsweise bei Werkzeugmaschinen hilfreich sein, bei denen wenigstens eine zur Steuerung der Werkzeugmaschine erforderliche Funktion nicht über die Standard-Akkuschnittstelle steuerbar ist.

Der Schnittstellenadapter kann auch einen Signalwandler umfassen, der eingerichtet ist, ein an einer der Signalschnittstellen ankommendes Signal umzuwandeln, beispielsweise einen Pegel, eine Impedanz oder eine Signalcodierung des Signals zu verändern, und an der anderen Signalschnittstelle auszugeben.

Denkbar ist insbesondere, dass der Signalwandler eingerichtet ist, ein in "Robotersprache" vom Bauroboter abgesandtes Sensor- und / oder Steuersignal in eine von der Werkzeugmaschine verarbeitbare Signalform zu übersetzen. Alternativ oder ergänzend ist auch denkbar, dass der Signalwandler eingerichtet ist, ein Sensor- und / oder Steuersignal der Werkzeugmaschine in eine für den Bauroboter verarbeitbare Signalform umzusetzen.

Somit kann der Bauroboter in die Lage versetzt werden, unterschiedliche Arten von Werkzeugmaschinen mit jeweils Werkzeugmaschinen-unabhängigen Signalen zu steuern oder umgekehrt Signale von unterschiedlichen Werkzeugmaschinen zu empfangen.

Die Übertragung von Signalen kann dabei halbduplex- oder vollduplex-basiert erfolgen. Sie kann differentiell oder massebezogen sein.

Denkbar ist auch alternativ oder ergänzend, dass der Signalumwandler die zu übertragende Betriebsenergie umwandelt.

Die Signalschnittstellen können elektrische Schnittstellen sein. Beispielsweise kann vorgesehen sein, auf die Betriebsenergie-Versorgung wenigstens ein Signal aufzumodulieren.

Denkbar ist alternativ oder ergänzend auch, dass wenigstens eine der Signalschnittstellen zur drahtlosen Datenübertragung, insbesondere zur optischen und / oder Funk-basierten Datenübertragung, eingerichtet ist. Günstig ist beispielsweise, wenn die drahtlose Datenübertragung einen Funkstandard mit niedriger Energie nutzt. Die Verbindung kann selbsttätig koppelnd sein. Denkbar sind insbesondere eine induktive, eine Mikrowellen-basierte und / oder eine optische, bspw. eine Infrarot-basierte, Datenübertragung. Eine solche drahtlose Datenübertragung kann selbst in stark Staub-belasteten Umgebungen, wie sie auf Baustellen häufig anzutreffen sind, sicher erfolgen. Auch benötigt eine solche Datenübertragung zur Kopplung keine mechanische Interaktion, sodass sich das An- und das Abkoppeln vereinfachen.

Der Schnittstellenadapter kann auch eine Steuerung aufweisen, die eingerichtet ist, ein Steuersignal zu erzeugen und an wenigstens eine der beiden Signalschnittstellen auszugeben.

Dazu kann der Schnittstellenadapter einen Mikrocontroller aufweisen. Der Mikrocontroller kann einen Speicher, einen Mikroprozessor und/oder auf dem Mikroprozessor ausführbaren, im Speicher gespeicherten Programmcode aufweisen.

Mit einer solchen Steuerung kann der Schnittstellenadapter die angeschlossene Werkzeugmaschine und / oder den Bauroboter steuern. Beispielsweise kann die Steuerung, insbesondere der Programmcode, eingerichtet sein, einen Störfall, beispielsweise eine fehlerhafte Anordnung der Werkzeugmaschine am Schnittstellenadapter, zu detektieren. Sie kann dann eingerichtet sein, dem Bauroboter ein entsprechendes Signal über die Bauroboter-Signalschnittstelle zu senden. Der Bauroboter kann infolge des Signals beispielsweise eine Störfallbehandlungsroutine starten. Ein weiteres Beispiel ist, dass die Steuerung der Werkzeugmaschine ein Abfragesignal über die Werkzeugmaschinen-Signalschnittstelle sendet. Die Werkzeugmaschine kann dann ein Antwortsignal zurücksenden. Beispielsweise kann die Steuerung auf diese Weise einen Parameter der Werkzeugmaschine abfragen und / oder einen Parameter einstellen.
So kann sie beispielsweise eingerichtet sein, einen Typ oder eine Kennung der Werkzeugmaschine abfragen. Sie kann dann eingerichtet eingerichtet sein, einen Parameter der Steuerung selbst, beispielsweise ein die Umwandlung betreffender Parameter des Signalwandlers, dem Typ oder der Kennung entsprechend einzustellen und / oder den Parameter, hier der Typ oder die Kennung, an den Bauroboter über die Bauroboter-Signalschnittstelle weiterzuleiten. Analog ist auch denkbar, dass die Steuerung dem Bauroboter ein Abfragesignal sendet und von diesem ein Antwortsignal erhält. Infolge des Antwortsignals kann die Steuerung einen Parameter der Steuerung selbst und / oder der Werkzeugmaschine einstellen.

Insbesondere kann die Steuerung eingerichtet sein, wenigstens ein Sensorsignal von der Werkzeugmaschinen-Signalschnittstelle und / oder von der Bauroboter-Signalschnittstelle zu empfangen. Dann kann die das Sensorsignal von der Steuerung zur Steuerung genutzt werden. Steht das Sensorsignal beispielsweise in Bezug auf durch die Werkzeugmaschine ausgelöste Vibrationen, so kann die Steuerung bei Überschreiten eines bestimmten Ausmaßes an Vibrationen der Werkzeugmaschine ein Steuersignal zum Arbeiten mit geringerer Leistung und / oder zum Einlegen eines Ruhemodus über die Werkzeugmaschinen-Signalschnittstelle senden. So kann der Bauroboter vor mechanischer Überbeanspruchung geschützt werden.

Alternativ oder ergänzend sind auch weitere Sensorsignale denkbar, beispielsweise Sensorsignale, die mindestens eine Kenngröße der Werkzeugmaschine und / oder des Bauroboters, beispielsweise bezüglich Vibration, Strom, Kraft, Temperatur, Werkzeugmaschinenart, Lage und / oder Position, eine Wegstrecke, ein Vorschub und / oder dergleichen, indizieren.

Ist die Akkuschnittstelle verfügbar, kann das Sensorsignal auch in Bezug auf einen an die Akkuschnittstelle angeschlossenen Akkumulator beziehen.

Auch ist denkbar, dass das Sensorsignal einen Betriebsmodus indiziert und / oder das die Steuerung einen Betriebsmodus, insbesondere der Werkzeugmaschine, einstellt.

Beispielsweise kann so das Verhalten der Werkzeugmaschine danach ausgerichtet werden, ob ein Akkumulator oder der Schnittstellenadapter angeschlossen ist. Je nach erkanntem Zustand kann beispielsweise ein Trigger gesetzt oder ignoriert werden. Es kann beispielsweise ein Aufwachmodus ausgelöst werden. Es können auch Identifikationskennzeichen von der Steuerung gesendet und / oder von dieser empfangen werden.

Die Haltbarkeit des Bauroboters und / oder die Präzision, mit der Bauarbeiten ausgeführt werden können, lässt sich verbessern, wenn der Schnittstellenadapter wenigstens ein Dämpfungselement zur Dämpfung von auf den Schnittstellenadapter eintreffende Vibrationen aufweist. Das Dämpfungselement kann zur passiven und / oder aktiven Dämpfung eingerichtet sein.

Der Schnittstellenadapter selbst kann wenigstens einen Sensor aufweisen. Der Sensor kann beispielsweise ein Kraftsensor und / oder ein Drucksensor sein. Dann kann der Schnittstellenadapter eingerichtet sein, eine Anpresskraft, eine Zugkraft und / oder dergleichen zu messen.

Auch wird ein **System** vorgestellt umfassend einen Bauroboter, einen Schnittstellenadapter der vorangehend und / oder nachfolgend beschriebenen Art und eine elektrische Werkzeugmaschine, wobei die elektrische Werkzeugmaschine eine Standard-Akkuschnittstelle aufweist und wobei die Standard-Akkuschnittstelle der Werkzeugmaschine an der Verbindungsstelle des Schnittstellenadapters angeordnet ist.

Die Werkzeugmaschine kann insbesondere ein oder mehrere Merkmale der vorangehend beschriebenen Werkzeugmaschine aufweisen. Insbesondere kann sie die Schutzeinrichtung umfassen.

Denkbar ist, dass das System auch zusätzliche Adapterteile umfasst. So kann es Werkzeugmaschinen-spezifische und / oder Bauroboter-spezifische Adapterteile geben. Mit diesen lassen sich Werkzeugmaschinen und / oder Bauroboter an den Schnittstellenadapter anpassen.

Die Werkzeugmaschine kann eingerichtet sein, insbesondere über ihre Standard-Akkuschnittstelle, zu detektieren, ob an der Standard-Akkuschnittstelle ein Akkumulator oder der Schnittstellenadapter montiert ist Sie kann auch eingerichtet sein zu detektieren, ob an der Standard-Akkuschnittstelle überhaupt ein Element angeordnet ist, und insbesondere gegebenenfalls welcher Art das Element ist. So kann die Werkzeugmaschine beispielsweise eingerichtet sein, Rekuperation zu nutzen, wenn ein Akkumulator montiert ist und Rekuperation nicht zu nutzen, wenn der Schnittstellenadapter montiert ist.

Es ist auch denkbar, dass die Werkzeugmaschine umgebaut ist. So ist denkbar, einen Handgriffeinsatz der Werkzeugmaschine zumindest teilweise gegen ein Teil oder gegen den gesamten Schnittstellenadapter zu tauschen.

Der Bauroboter kann zur Ausführung von Bauarbeiten auf einer Hochbau-Baustelle und / oder einer Tiefbau-Baustelle und / oder einer, insbesondere Stahl-basierten, Industrieanlage, beispielsweise einer Ölplattform, ausgebildet sein. Er kann zur Ausführung von Bauarbeiten an einer Decke, einer Wand und / oder einem Boden eingerichtet sein. Er kann zum Bohren, Trennen, Meißeln, Schleifen und / oder Setzen eines Bauelements ausgebildet sein. Er kann ein oder mehrere Werkzeugmaschinen aufweisen. Die Werkzeugmaschine kann ein Trennwerkzeug, ein Schleifwerkzeug und / oder ein Setzwerkzeug umfassen. Denkbar ist auch, dass der Endeffektor und / oder die Werkzeugmaschine zum Markieren ausgebildet sind. Beispielsweise kann der Endeffektor ein Farbsprühgerät aufweisen. Alternativ oder ergänzend kann am Endeffektor auch ein Messwerkzeug, beispielsweise ein Distanzmesser, angeordnet sein.

Am Endeffektor kann der Schnittstellenadapter montiert sein. Am Schnittstellenadapter kann wiederum die Werkzeugmaschine und / oder das Messwerkzeug montiert sein. Grundsätzlich kann der Bauroboter, insbesondere der Endeffektor, auch mehrere Werkzeugmaschinen und / oder Messwerkzeuge umfassen.

Der Bauroboter kann einen Manipulator aufweisen. Der Manipulator kann als Roboterarm ausgebildet sein. Der Manipulator kann auch eine Hubvorrichtung aufweisen. Die Hubvorrichtung kann das vom Manipulator erreichbare Gesamtvolumen vergrößern. Der Manipulator kann wenigstens drei Freiheitsgrade aufweisen. Insbesondere kann er wenigstens sechs Freiheitsgrade aufweisen.

Der Bauroboter kann auch eine mobile Plattform aufweisen. Die mobile Plattform kann ein Räderfahrwerk und / oder ein Kettenfahrwerk umfassen. Die mobile Plattform kann wenigstens zwei Freiheitsgrade aufweisen. Der Bauroboter kann insgesamt wenigstens zehn Freiheitsgrade aufweisen. Denkbar ist alternativ auch, dass die mobile Plattform eine Flugplattform ist oder eine solche umfasst. Beispielsweise kann der Bauroboter auch als Flugdrohne ausgebildet sein.

Denkbar ist auch, dass der Bauroboter über den Schnittstellenadapter aktivierbar ist.

Auch ist denkbar, dass die Werkzeugmaschine über die Verbindungsstelle aktivierbar und / oder deaktivierbar ist.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: eine Werkzeugmaschine;
- Fig. 2: einen Schnittstellenadapter in einer Seitenansicht;
- Fig. 3: eine umgebaute Werkzeugmaschine mit einem Werkzeugmaschinen-Adapterteil in einer Seitenansicht;
- Fig. 4: eine Werkzeugmaschine während ihres Umbaus in einer perspektivischen Ansicht;
- Fig. 5: die umgebaute Werkzeugmaschine mit montiertem Schnittstellenadapter in einer Seitenansicht;
- Fig. 6: eine Innenansicht eines Teils des Schnittstellenadapters mit einer Steuerung in einer perspektivischen Ansicht;
- Fig. 7: ein System umfassend einen Bauroboter, einen Schnittstellenadapter und eine Werkzeugmaschine und
- Fig. 8: ein vereinfachtes Blockschaltbild.

In der nachfolgenden Beschreibung der Figuren werden zur Erleichterung des Verständnisses der Erfindung für gleiche oder sich funktional entsprechende Elemente jeweils die gleichen Bezugszeichen verwendet.

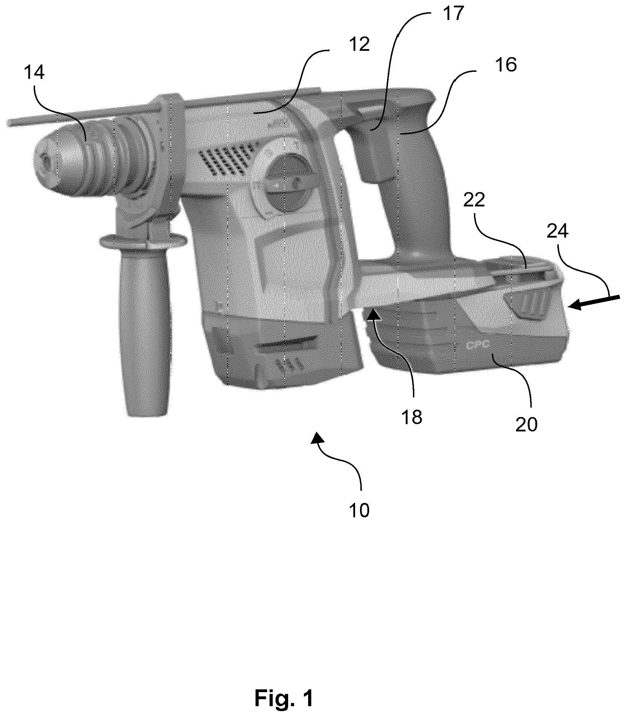

**Fig. 1** zeigt eine Werkzeugmaschine **10**. Die Werkzeugmaschine 10 ist eine akkubetriebene Gesteinsbohrmaschine.

Sie weist einen Grundkörper **12** auf, aus dem einenends eine Werkzeugaufnahme **14** herausragt. Anderenends weist sie einen Handgriff **16** auf. Am Handgriff 16 befindet sich ein Betätigungselement **17,** mit dem die Werkzeugmaschine 10 manuell steuerbar ist. Insbesondere kann mit dem Betätigungselement 17 ein Bohrvorgang gestartet, gestoppt oder eine Drehzahl reguliert werden.

Weiter weist sie eine Standard-Akkuschnittstelle **18** auf. Die Standard-Akkuschnittstelle 18 ist zur Aufnahme von Akkumulatoren ausgebildet. Sie dient unter anderem zur Fixierung des Akkumulators an der Werkzeugmaschine 10, zur Übertragung von Betriebsenergie zwischen dem Akkumulator und der Werkzeugmaschine 10 sowie zur Signalübertragung zwischen diesen beiden.

Beispielhaft zeigt Fig. 1 einen Akkumulator **20**, der im in Fig. 1 gezeigten Zustand in etwa zur Hälfte auf die Standard-Akkuschnittstelle 18 aufgeschoben ist.

Um den Akkumulator 20 an der Standard-Akkuschnittstelle 18 montieren zu können, weist der Akkumulator 20 eine Verbindungsstelle **22** auf, die komplementär zu der Standard-Akkuschnittstelle 18 ausgebildet ist.

Um den Akkumulator 20 vollständig zu montieren, müsste er in Richtung des Pfeils **24** weiter auf die Standard-Akkuschnittstelle 18 aufgeschoben werden. Zur vollständigen Demontage müsste der Akkumulator dementsprechend entgegen der Richtung des Pfeils 24 weiter von der Standard-Akkuschnittstelle 18 abgeschoben werden.

Montage als auch Demontage sind somit werkzeuglos möglich.

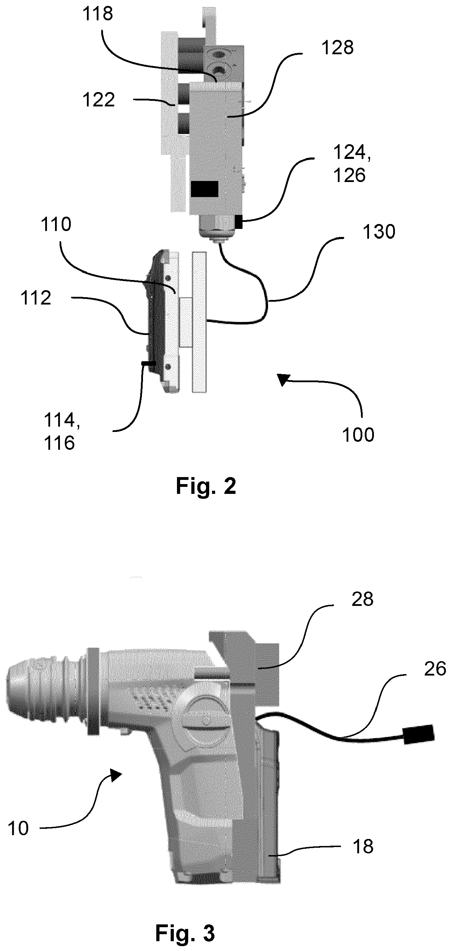

**Fig. 2** zeigt einen Schnittstellenadapter **100** zur Verbindung einer elektrischen Werkzeugmaschine mit einem Endeffektor eines Bauroboters.

Der Schnittstellenadapter weist eine Werkzeugmaschinen-Verbindungsstelle **110** zur Verbindung mit einer Werkzeugmaschine, z. B. der Werkzeugmaschine 10 gemäß Fig. 1, auf.

Die Werkzeugmaschinen-Verbindungsstelle 110 weist einen Werkzeugmaschinen-Verbindungsabschnitt **112** auf, der komplementär zu der Standard-Akkuschnittstelle 18 (siehe Fig. 1) ausgebildet ist. Somit ist auch die Werkzeugmaschinen-Verbindungsstelle 110 insgesamt komplementär zu der Standard-Akkuschnittstelle 18 ausgebildet.

Der Werkzeugmaschinen-Verbindungsabschnitt 112 weist elektrische Kontakte **114** auf. Ist die Werkzeugmaschine 10 an die Werkzeugmaschinen-Verbindungsstelle 110 angeschlossen, kann über die Kontakte 114 Betriebsenergie, insbesondere zum Betrieb der Werkzeugmaschine 10, übertragen werden. Beispielsweise kann vorgesehen sein, einen elektrischen Strom mit einer Spannung von rund 22 V Gleichspannung als Betriebsenergie zu übertragen.

Durch Aufmodulieren auf die zu übertragende Betriebsenergie können auch Signale bidirektional über die Kontakte 114 von und / oder zur Werkzeugmaschine 10 übertragen werden. Insofern bilden die Kontakte 114 in Verbindung mit der übrigen Werkzeugmaschinen-Verbindungsstelle 110 zugleich eine Werkzeugmaschinen-Signalschnittstelle **116**.

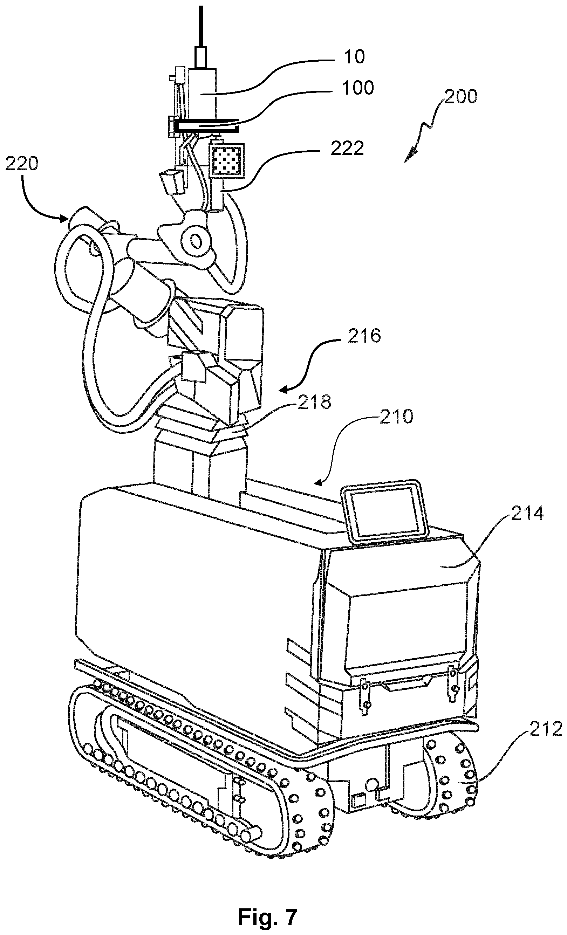

Weiter weist der Schnittstellenadapter 100 eine Bauroboter-Verbindungsstelle **118** auf. Diese dient zur Verbindung mit einem Endeffektor eines Bauroboters, beispielsweise dem noch weiter unten in Verbindung mit Fig. 7 näher beschriebenen Bauroboter.

Zur, insbesondere lösbaren, Befestigung des Schnittstellenadapters 100 am Endeffektor weist die Bauroboter-Verbindungsstelle 118 eine, insbesondere pneumatisch betätigbare, Halterung **120** auf.

Die Werkzeugmaschinen-Verbindungsstelle 110 kann auf ein Dämpfungselement **122** aufgeschoben werden, sodass sich das Dämpfungselement 122 im Wesentlichen zwischen der Werkzeugmaschinen-Verbindungsstelle 110 und der Bauroboter-Verbindungsstelle 118 befindet. Es dient zur Dämpfung von Vibrationen, die beispielsweise von der Werkzeugmaschine 10 während ihres Betriebs stammen können.

Über eine elektrische Kontaktbuchse **124** kann Betriebsenergie zwischen einem angeschlossenen Bauroboter und dem Schnittstellenadapter 100 übertragen werden. Beispielsweise kann Betriebsenergie in Form elektrischen Stroms mit einer Spannung von 48 V übertragbar sein.

Über die Kontaktbuchse 124 können durch Aufmodulieren auch Signale, insbesondere bidirektional, zwischen dem Schnittstellenadapter 100 und dem Bauroboter übertragen werden. Insofern bildet die Kontaktbuchse 124 in Verbindung mit der übrigen Bauroboter-Verbindungsstelle 118 zugleich eine Bauroboter-Signalschnittstelle **126**.

Somit können Signale zwischen der Werkzeugmaschine 10 und dem Bauroboter über die Werkzeugmaschinen-Signalschnittstelle 116 und über die Bauroboter-Signalschnittstelle 126 übermittelt werden.

Weiter weist der Schnittstellenadapter 100 eine Steuerung **128** auf.

Die Werkzeugmaschinen-Verbindungsstelle 110 ist elektrisch mit dem übrigen Schnittstellenadapter 100, insbesondere mit der Steuerung 128, über eine Verbindungsleitung **130** elektrisch verbunden.

Auch kann somit über die Werkzeugmaschinen- und die Bauroboter-Signalschnittstellen 116, 126 Betriebsenergie zwischen dem Bauroboter und der Werkzeugmaschine 10 übertragen werden.

**Fig. 3** zeigt die Werkzeugmaschine 10 in einer umgebauten Form. Im Vergleich zu der Gestalt gemäß Fig. 1 sind der Handgriff 16 mit dem Betätigungselement 17 sowie der Akkumulator 20 entfernt worden.

Das manuell bedienbare Betätigungselement 17 ist durch einen Steueranschluss **26** ersetzt worden, sodass die Steuerfunktionen des Betätigungselements 17 nunmehr elektronisch steuerbar sind.

Ein Werkzeugmaschinen-Adapterteil **28** ist an die Werkzeugmaschine 10 anstelle des Handgriffs 16 montiert worden.

Die Standard-Akkuschnittstelle 18 ist umgeklappt an einer Außenseite des Werkzeugmaschinen-Adapterteils 28 montiert worden.

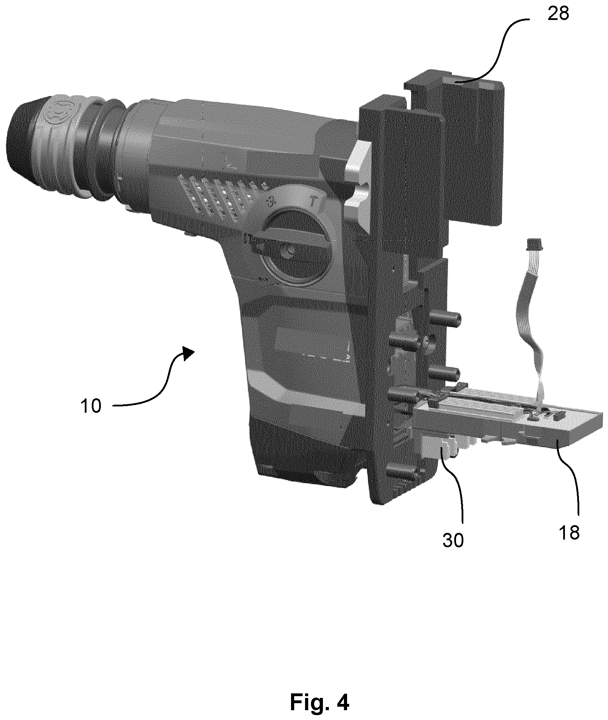

**Fig. 4** zeigt die Werkzeugmaschine 10 in einer perspektivischen Darstellung während ihres Umbaus. Insbesondere ist die Standard-Akkuschnittstelle 18 zu erkennen, die in einem nachfolgenden Schritt entsprechend der Darstellung in Fig. 4 um ca. 90 Grad gegen den Uhrzeigersinn gegen das bereits montierte Werkzeugmaschinen-Adapterteil 28 zu klappen ist.

Zu erkennen sind ferner an der Standard-Akkuschnittstelle 18 ausgebildete Gegenkontakte **30**, die eingerichtet sind, einen elektrischen Kontakt zu den Kontakten 114 (siehe Fig. 2) herzustellen.

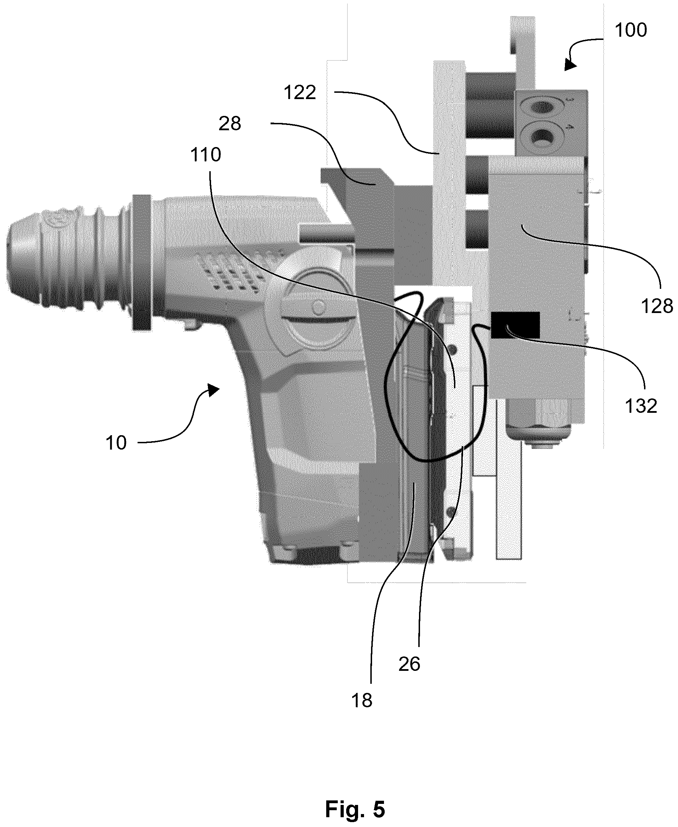

**Fig. 5** zeigt die umgebaute Werkzeugmaschine 10 gemäß Fig. 3, an die der Schnittstellenadapter 100 gemäß Fig. 2 montiert ist.

Dazu ist das Dämpfungselement 122 am Werkzeugmaschinen-Adapterteil 28 montiert, beispielsweise angeschraubt.

Die Werkzeugmaschinen-Verbindungsstelle 110 sitzt an der Standard-Akkuschnittstelle 18.

Der Steueranschluss 26 ist mit einer Steueranschlussbuchse **132** der Steuerung 128 verbunden.

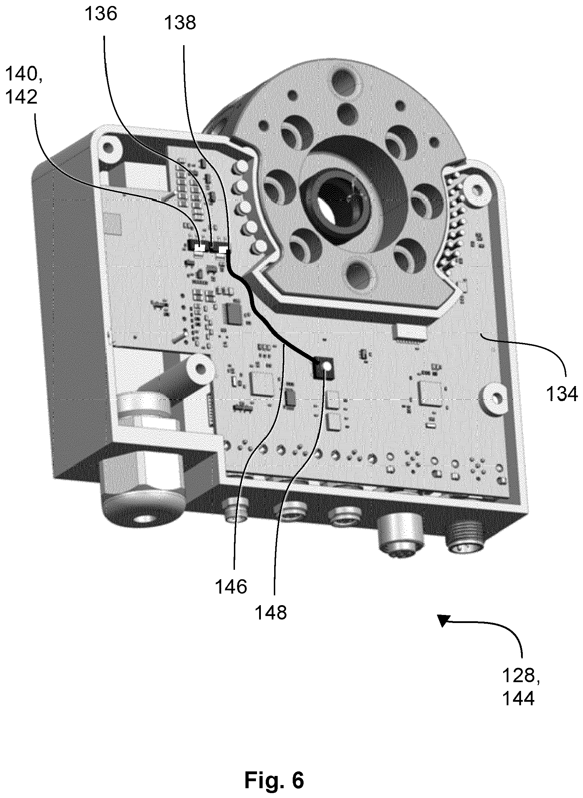

**Fig. 6** zeigt in einer perspektivischen Darstellung eine Innenansicht der Steuerung 128.

Die Steuerung 128 umfasst eine elektronische Schaltung **134,** die unter anderem einen Mikrocontroller **136** aufweist. Der Mikrocontroller 136 weist einen Mikroprozessor **138** und einen Speicher **140** auf. In dem Speicher 140 ist Programmcode **142** gespeichert, der auf dem Mikroprozessor 138 ausführbar ist.

Unter anderem mit Hilfe des Programmcodes 142 ist die Steuerung 128 eingerichtet, ein an einer der Signalschnittstellen ankommendes Signal umzuwandeln. Insbesondere ist sie eingerichtet, an einer Roboter-Signalschnittstelle 144 ankommende, auf einen Gleichstrom mit einer Spannung von 48 V aufmodulierte Signale in auf einen Gleichstrom mit einer Spannung von 22 V aufmodulierte Signale umzusetzen und auf der Werkzeugmaschinen-Signalschnittstelle 116 auszugeben. Insoweit bildet die Steuerung 128 auch einen Signalwandler **144.**

Ferner ist die Steuerung 128 mit Hilfe des Programmcodes 142 eingerichtet, Sensorsignale **146** eines Vibrationssensors **148** abzufragen. Sie ist ferner eingerichtet, dass, wenn wenigstens eines der Sensorsignale 146 einen Grenzwert überschreitet, ein Bremssignal an der Werkzeugmaschinen-Signalschnittstelle 116 (Fig. 2) auszugeben. Aufgrund des Bremssignals kann die im vorliegenden Ausführungsbeispiel als Gesteinsbohrmaschine ausgebildete Werkzeugmaschine 10 beispielsweise eine Drehzahl reduzieren, sodass sich auch die durch sie ausgelösten Vibrationen vermindern.

**Fig. 7** zeigt ein System **200.** Das System 200 umfasst einen Bauroboter 210, einen Schnittstellenadapter 100 und eine elektrische Werkzeugmaschine 10. Der Schnittstellenadapter 100 entspricht dem in Bezug auf die vorangehenden Fig. 2, 5 und 6 beschriebenen Schnittstellenadapter 100.

Die Werkzeugmaschine 10 entspricht der in Bezug auf die vorangehenden Fig. 1, 3, 4 und 5 beschriebenen Werkzeugmaschine 10.

Der Bauroboter **210** weist eine mit einem Kettenfahrwerk **212** ausgestattete fahrbare Plattform **214** auf. Auf der fahrbaren Plattform 214 ist ein Manipulator **216** angeordnet. Der Manipulator 216 weist eine Hubvorrichtung **218** auf, auf der ein mehrachsiger Arm **220** montiert ist. Die Hubvorrichtung 218 kann den Arm 220 in vertikaler Richtung verlagern. Der Arm 220 weist wenigstens sechs Freiheitsgrade auf. Somit kann ein an einem Arbeitsende des Arms 220 angeordneter Endeffektor **222** sowohl vertikal als auch horizontal ausgerichtet werden. Somit kann der Bauroboter 210 Bauarbeiten, insbesondere mit der als Gesteinsbohrmaschine ausgebildeten Werkzeugmaschine 10 Bohrarbeiten, an Decken, Wänden und / oder Böden ausführen.

Der Schnittstellenadapter 100 ist am Endeffektor 222 angeordnet. Seine Bauroboter-Signalschnittstelle 126 (siehe Fig. 2) ist mit einem entsprechenden Signalausgang des Bauroboters 210 verbunden.

Unter anderem ist die Standard-Akkuschnittstelle 18 (siehe Fig. 2) der Werkzeugmaschine 10 an der Werkzeugmaschinen-Verbindungsstelle 110 (siehe Fig. 2) des Schnittstellenadapters 100 angeordnet.

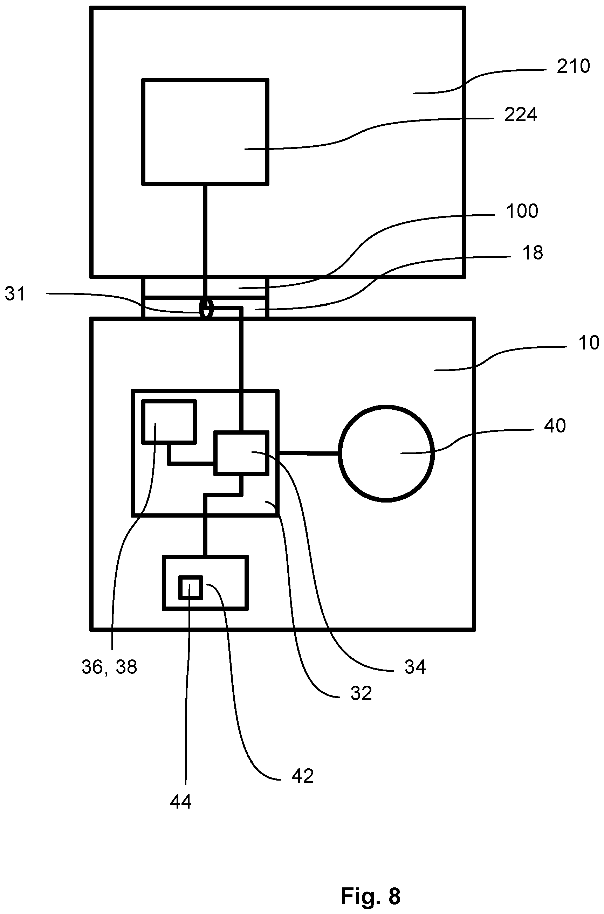

**Fig. 8** zeigt ein vereinfachtes Blockschaltbild des Systems 200. Vereinfachend beschränkt sich die Darstellung gemäß Fig. 8 auf die Merkmale, die im Folgenden näher erläutert werden. Soweit nicht anders beschrieben, entsprechen die im Folgenden näher erläuterten Elemente jeweils den entsprechenden vorangehend beschriebenen Elementen.

Dargestellt ist, dass das System 200 den Bauroboter 210 und die elektrische Werkzeugmaschine 10 umfasst.

Die Werkzeugmaschine 10 ist wie vorangehend beschrieben über den Schnittstellenadapter 100 und die Akkuschnittstelle 18 mit dem Bauroboter 10 verbunden.

Die Werkzeugmaschine 10 weist eine Werkzeugmaschinen-Steuerung **32** auf. Diese umfasst einen Werkzeugmaschinen-Mikrocontroller **34** und einen Werkzeugmaschinen-Speicher **36**. In dem Werkzeugmaschinen-Speicher 36 ist Werkzeugmaschinen-Programmcode **38** abgelegt, der auf dem Werkzeugmaschinen-Mikrocontroller 34 ausführbar ist. Der Programmcode 38 und insgesamt der Werkzeugmaschinen-Mikrocontroller **34** sind derart eingerichtet, Elemente der Werkzeugmaschine 10 zu steuern.

Insbesondere ist die Werkzeugmaschinen-Steuerung 32 eingerichtet, einen Motor **40** der Werkzeugmaschine zu steuern. Der Motor 40 ist eingerichtet, die Werkzeugaufnahme 14 (siehe Fig. 1) anzutreiben.

Über eine Datenschnittstelle **31** können Daten, insbesondere Signale und Betriebsdaten der Werkzeugmaschine 10, bidirektional zwischen dem Bauroboter 10 und der Werkzeugmaschine übertragen werden. Die Datenschnittstelle 31 ist in die Akkuschnittstelle 18 integriert.

Insbesondere lässt sich - wie auch vorangehend beschrieben - die Werkzeugmaschine 10 durch den Bauroboter 100 fernsteuern. Dazu sind Steuersignale über den Schnittstellenadapter 100 und die Datenschnittstelle 31 von einer Bauroboter-Steuerung **224** des Bauroboters 10 zu der Werkzeugmaschinen-Steuerung 32 übertragbar.

Die Werkzeugmaschine 10 weist eine Schutzeinrichtung **42** zum Schutz eines Benutzers bei manueller Nutzung der Werkzeugmaschine 10 auf. Die Schutzeinrichtung 42 umfasst einen Sensor **44**.

Die Schutzeinrichtung 42, insbesondere der Sensor 44, ist eingerichtet, eine Blockade eines in der Werkzeugaufnahme aufgenommenen Werkzeugs zu detektieren und diese Blockade dem Werkzeugmaschinen-Mikrocontroller 34 mit einem Blockadesignal zu melden.

Mithilfe des Werkzeugmaschinen-Programmcodes 38 ist der Werkzeugmaschinen-Mikrocontroller 34 in einem standardmäßig aktivierten manuellen Betriebsmodus und damit eingerichtet, bei Empfang des Blockadesignals den Motor 40 bis zu einem Stillstand abzubremsen.

Jedoch kann die Bauroboter-Steuerung 224 ein Deaktivierungssignal an den Werkzeugmaschinen-Mikrocontroller 34 senden, sodass dieser, wiederum mithilfe des Werkzeugmaschinen-Programmcodes 38, in einen Automatikbetriebsmodus wechselt. In diesem Automatikbetriebsmodus reagiert der Werkzeugmaschinen-Mikrocontroller 34 nicht auf etwaige ankommende Blockadesignale der Schutzeinrichtung 42. Somit ist die Schutzeinrichtung 42 ferngesteuert deaktivierbar.

Durch ein Aktivierungssignal kann die Bauroboter-Steuerung 224 in analoger Weise den Werkzeugmaschinen-Mikrocontroller 34 veranlassen, wieder in den manuellen Betriebsmodus zurückzuwechseln. Somit ist die Schutzeinrichtung 42 auch ferngesteuert aktivierbar.

Dabei ist vorgesehen, dass die Bauroboter-Steuerung 224 vor Ausführung einer Bauarbeit, in diesem Fall vor Beginn eines Bohrens in Gestein, die Schutzeinrichtung 42 deaktiviert und danach wieder aktiviert.

### Bezugszeichenliste

- 10: Werkzeugmaschine
- 12: Grundkörper
- 14: Werkzeugaufnahme
- 16: Handgriff
- 17: Betätigungselement
- 18: Akkuschnittstelle
- 20: Akkumulator
- 22: Verbindungsstelle
- 24: Pfeil
- 26: Steueranschluss
- 28: Adapterteil
- 30: Gegenkontakt
- 31: Datenschnittstelle
- 32: Werkzeugmaschinensteuerung
- 34: Werkzeugmaschinen-Mikrocontroller
- 36: Werkzeugmaschinen-Speicher
- 38: Werkzeugmaschinen-Programmcode
- 40: Motor
- 42: Schutzeinrichtung
- 44: Sensor
- 100: Schnittstellenadapter
- 110: Werkzeugmaschinen-Verbindungsstelle
- 112: Werkzeugmaschinen-Verbindungsabschnitt
- 114: Kontakt
- 116: Werkzeugmaschinen-Signalschnittstelle
- 118: Bauroboter-Verbindungsstelle
- 120: Halterung
- 122: Dämpfungselement
- 124: Kontaktbuchse
- 126: Bauroboter-Signalschnittstelle
- 128: Steuerung
- 130: Verbindungsleitung
- 132: Steueranschlussbuchse
- 134: Schaltung
- 136: Mikrocontroller
- 138: Mikroprozessor
- 140: Speicher
- 142: Programmcode
- 144: Signalwandler
- 146: Sensorsignal
- 148: Vibrationssensor
- 200: System
- 210: Bauroboter
- 212: Kettenfahrwerk
- 214: fahrbare Plattform
- 216: Manipulator
- 218: Hubvorrichtung
- 220: Arm
- 222: Endeffektor
- 224: Bauroboter-Steuerung

## Patentansprüche

1. Elektrische Werkzeugmaschine (10), insbesondere Handwerkzeugmaschine, umfassend einen Motor (40) und eine Werkzeugaufnahme (14) zur Aufnahme eines Werkzeugs, beispielsweise eines Bohrwerkzeugs, Trennwerkzeugs und / oder eines Schleifwerkzeugs, wobei der Motor (40) eingerichtet ist, die Werkzeugaufnahme (14) anzutreiben,
**dadurch gekennzeichnet,**
**dass** die Werkzeugmaschine (10) elektrisch und / oder per Funk fernsteuerbar ist.

2. Werkzeugmaschine nach dem vorhergehenden Anspruch, **dadurch gekennzeichnet, dass** die Werkzeugmaschine (10) eine Datenschnittstelle (31) aufweist, wobei vorzugsweise die Werkzeugmaschine (10) über die Datenschnittstelle (31) fernsteuerbar ist.

3. Werkzeugmaschine nach einem der vorhergehenden Ansprüche, **dadurch gekennzeichnet, dass** die Datenschnittstelle (31) bidirektional ausgebildet ist.

4. Werkzeugmaschine nach einem der vorhergehenden Ansprüche, **dadurch gekennzeichnet, dass** die Werkzeugmaschine (10) wenigstens eine Schutzeinrichtung (42) zum Schutz eines Benutzers bei manueller Nutzung der Werkzeugmaschine (10) aufweist.

5. Werkzeugmaschine nach einem der vorhergehenden Ansprüche, **dadurch gekennzeichnet, dass** die Schutzeinrichtung (42) eingerichtet ist, eine Vibration, eine Arbeitsleistung, eine Drehfrequenz, eine Geschwindigkeit und / oder ein Drehmoment zu reduzieren oder zu stoppen.

6. Werkzeugmaschine nach einem der vorhergehenden Ansprüche, **dadurch gekennzeichnet, dass** die Schutzeinrichtung (42) eingerichtet ist, einen Betrieb des Motors (40) zu sperren.

7. Werkzeugmaschine nach einem der vorhergehenden Ansprüche, **dadurch gekennzeichnet, dass** die Schutzeinrichtung deaktivierbar, insbesondere aktivierbar und deaktivierbar, ist.

8. Werkzeugmaschine nach einem der vorhergehenden Ansprüche, **dadurch gekennzeichnet, dass** die Schutzeinrichtung (42) ferngesteuert deaktivierbar, insbesondere ferngesteuert aktivierbar und deaktivierbar, ist.

9. Werkzeugmaschine nach einem der vorhergehenden Ansprüche, **dadurch gekennzeichnet, dass** die Werkzeugmaschine (40) eine Akkuschnittstelle (18) zum Anschluss eines Akkumulators aufweist.

10. Werkzeugmaschine nach einem der vorhergehenden Ansprüche, **dadurch gekennzeichnet, dass** zumindest ein Teil der Datenschnittstelle (31) in die Akkuschnittstelle (18) integriert ist.

11. **System (200)** umfassend einen Bauroboter (210) und eine elektrische Werkzeugmaschine (10) nach einem der vorherigen Ansprüche und jedenfalls nach Anspruch 4, wobei die elektrische Werkzeugmaschine (10) am Bauroboter (210) angeordnet ist, wobei der Bauroboter (210) eingerichtet ist, die Schutzeinrichtung (42) der Werkzeugmaschine (10) zu aktivieren und / oder zu deaktivieren.
